**Europäisches Patentamt**

**European Patent Office**

**Office européen des brevets**

(19)

(11) Veröffentlichungsnummer : **0 456 613 A1**

(12) **EUROPÄISCHE PATENTANMELDUNG**

(21) Anmeldenummer : **91810365.6**

(22) Anmeldetag : **10.05.91**

(51) Int. Cl.$^5$ : **B29C 57/00, B65D 23/06, B65D 25/42, // B29L22:00**

(30) Priorität : **26.07.90 CH 2477/90**
**11.05.90 CH 1611/90**

(43) Veröffentlichungstag der Anmeldung :
**13.11.91 Patentblatt 91/46**

(84) Benannte Vertragsstaaten :
**AT BE CH DE DK ES FR GB GR IT LI LU NL SE**

(71) Anmelder : **SOPLAR SA**
**Transportstrasse 3**
**CH-9450 Altstätten (CH)**
Anmelder : **MIFA AG FRENKENDORF**
**Rheinstrasse 99**
**CH-4402 Frenkendorf (CH)**

(72) Erfinder : **Lehner, Alwin**
**Allmendstrasse 81**
**A-6971 Hard (AT)**

(74) Vertreter : **Riederer, Conrad A., Dr.**
**Bahnhofstrasse 10**
**CH-7310 Bad Ragaz (CH)**

(54) **Verfahren zur Herstellung einer einstückigen blasgeformten Verpackung und Verpackung hergestellt nach dem Verfahren.**

(57)    Die einstückige blasgeformte Verpackung aus Kunststoff besteht aus einem Verpackungskörper (11) und einem Aufsatz (12). Der Aufsatz (12) weist einen Halsteil (13) und einen Ausgussteil (17) auf. Innerhalb des Halsteils ist ein Ringraum (29) vorgesehen, welcher unten eine Oeffnung (23) besitzt. Beim Ausgiessen kann die Oeffnung (23) als Lufteinlass dienen. Nach dem Ausgiessen kann Restflüssigkeit an der Aussenwandung des Ausgusses (17) hinunter in den Ringraum (29) und durch die Oeffnung (23) hindurch in das Innere (31) fliessen. Bei der Herstellung der Verpackung wird zuerst ein Halbfabrikat hergestellt, bei welchem der Halsteil (13) über einen Verbindungsabschnitt (19) mit dem Ausgussteil (17) verbunden ist. Nach dem Blasen wird die Oeffnung (23) gebildet. Hierauf wird der Ausgussteil (17) in den Halsteil (13) gestossen. Dadurch wird der Uebergangsabschnitt (19) umgestülpt und der Ringraum (29) gebildet.

EP 0 456 613 A1

FIG. 1

FIG. 2

Die Erfindung betrifft ein Verfahren zur Herstellung einer einstückigen blasgeformten Verpackung, z.B. einer Flasche, insbesondere für flüssige Produkte, mit einem Verpackungskörper und einem Aufsatz, welcher einen Halsteil und einen Ausgussteil aufweist.

Blasgeformte Flaschen haben ein weites Anwendungsgebiet gefunden. Sie bestehen in der Regel aus einem Kunststoff, z.B. Polyethylen, der bei der Entsorgung keine Probleme bietet. Polyethylen lässt sich wiederverwerten oder stellt bei der Kehrichtverbrennung ein energiereiches Brennmaterial dar, das keine Schadstoffe erzeugt, sondern lediglich Wasserdampf und Kohlendioxid. Die bekannten Kunststoffflaschen werden teilweise mit integriertem Ausguss und teilweise mit eingesetztem Ausguss produziert. Ein eingesetzter Ausguss wird in der Regel dann verwendet, wenn besondere Anforderungen bezüglich des Ausgiessens der Flüssigkeit bestehen. So kann beispielsweise gefordert werden, dass während des Ausgiessens kontinuierlich Luft in die Flasche eindringen kann, so dass die Flüssigkeit ohne Glucksen ruhig ausfliesst, so dass gut dosiert werden kann. Des weiteren kann gefordert werden, dass um den Ausguss herum ein Ringraum besteht, in den nach dem Ausgiessen am Ausguss herunterrinnende Flüssigkeit abfliessen und in die Flasche zurückfliessen kann, ohne das Gewinde für den Flaschenverschluss zu beschmutzen.

Eine Flasche mit eingesetztem Ausguss hat jedoch den Nachteil, dass zur Herstellung des Ausgusses zusätzlich ein teures Spritzwerkzeug notwendig ist. Des weiteren bedingt ein eingesetzter Ausguss eine hohe Passgenauigkeit. Es ist aber nicht leicht, enge Toleranzen für den Flaschenhalsinnendurchmesser zu erreichen, weil beim Blasverfahren leicht Abweichungen in der Wandstärke auftreten können. Ist jedoch der Innendurchmesser des Flaschenhalses zu gross, so besteht die Gefahr, dass der Ausguss beim Gebrauch der Flasche herausfällt, was sehr unangenehme Folgen und Gefahren nach sich ziehen kann.

Ein weiterer Nachteil ist ferner, dass nach dem Blasen der Flasche noch eine Montageoperation zum Einsetzen des Ausgusses notwendig ist. Hier können gegebenenfalls noch Fehler entstehen, indem beispielsweise bei einer Griffflasche der Ausguss mit dem Luftloch vom Griff entfernt eingesetzt wird. Nach einer solchen fehlerhaften Montage kann beim Ausgiessen von Flüssigkeit keine Luft in die Flasche eindringen, so dass das bekannte Glucksen entsteht, die Flüssigkeit unregelmässig durch den Ausguss ausfliesst und zudem noch weitere Flüssigkeit aus dem Luftloch strömt und Verschlussgewinde und Flasche beschmutzt. Da ferner der eingesetzte Ausguss aus einem anderen Kunststoff besteht als die Flasche, wird ein Recycling verunmöglicht oder mindestens erschwert.

Als Beispiel für eine Flasche mit eingesetztem Ausguss kann die DE-A-38 20 428 genannt werden, wo ein Ausguss mit einem Gewinde auf einen Flaschenhals aufgeschraubt ist. Dieser Ausguss weist einen Ausgussteil auf, der als Dispensierzylinder bezeichnet wird. Zwischen diesem Ausgussteil und dem Flaschenhals befindet sich ein ringförmiger Raum, in den nach Gebrauch der Flasche Restflüssigkeit fliessen und über eine Rücklauföffnung in die Flasche zurückströmen kann.

Es ist Aufgabe der vorliegenden Erfindung ein Verfahren zur Herstellung einer einstückigen blasgeformten Verpackung, z.B. einer Flasche, zu schaffen, mit dem es möglich ist, die wichtigsten Vorteile eine Flasche mit nachträglich eingesetztem Ausguss beizubehalten. Oder mit andern Worten: Es soll ein Verfahren geschaffen werden, das es gestattet, den Ausgussteil direkt am Behälter anzuformen und ferner auf unkompliziertem und preisgünstigem Weg eine Auffangrinne für das herablaufende Gut zu bilden.

Erfindungsgemäss wird dies dadurch erreicht, dass beim Blasen ein Uebergangsabschnitt zwischen dem Halsteil und dem Ausgussteil ausgebildet wird und dass dann der Ausgussteil in den Halsteil gestossen wird, wodurch der Uebergangsabschnitt zur Bildung eines Ringraumes innerhalb des Halsteiles umgestülpt wird.

Der Formgebung durch Blasen sind bekanntlich gewisse Grenzen gesetzt. So ist es praktisch unmöglich, eine Flasche durch Blasen herzustellen, welche einen Ringraum zwischen Halsteil und Ausgussteil besitzt, wie er beispielsweise beim eingesetzten Ausguss der DE-38 20 428 vorgesehen ist. Dadurch aber, dass gemäss der Erfindung beim Blasen ein Uebergangsabschnitt oder Zwischenstück zwischen dem Halsteil und dem Ausgussteil ausgebildet wird, ist es möglich, dem mit der Flasche integrierten Ausgussteil nachträglich die gewünschte Form mit einem Ringraum zu geben, indem der Ausgussteil in den Halsteil gestossen wird. Damit kann mit dem erfindungsgemässen Verfahren eine einstückige Flasche hergestellt werden, welche Eigenschaften besitzt, die bisher nur mit einer blasgeformten Flasche mit eingesetztem Ausguss erzielt werden konnten. Da die ganze Flasche aus ein und demselben Material besteht, ist ein Recycling des Materials möglich.

Eine zweckmässige Ausführungsform des Verfahrens sieht vor, dass der Uebergangsabschnitt flexibel ausgebildet und der Ausgussteil im kalten Zustand des Uebergangsabschnitts in den Halsteil gestossen wird. Das Einstossen kann somit erfolgen, nachdem die geblasene Verpackung der Blasform entnommen wurde und sich nicht mehr in plastischem Zustand wie während des Blasvorgangs befindet. Es kann sich allerdings als Vorteil erweisen, wenn die Abkühlung noch nicht Raumtemperatur erreicht hat, weil dann das Material noch flexibler ist.

Eine andere Ausführungsform sieht vor, dass der Uebergangsabschnitt erwärmt wird, bevor der Ausgussteil in den Halsteil gestossen wird. Diese Erwärmung kann beispielsweise durch einen Infrarotstrahler vorgenommen werden. Durch die lokale Erwärmung des Uebergangsabschnitts wird dessen Verformung erleichtert, wobei nach der Verformung wieder eine sehr stabile Ausgestaltung erreicht werden kann. Dies erweist sich als besonders zweckmässig, wenn am Ausgussteil ein Gewinde zur Aufnahme des Verschlussdeckels vorgesehen wird.

Vorteilhaft wird beim Blasen der Verpackung der Uebergangsabschnitt kuppelförmig ausgebildet. Durch eine solche Ausbildung wird die nachfolgende Verformung erleichtert. Es ist auch zweckmässig, beim Blasen die Verbindungsstelle zwischen dem Halsteil und dem Uebergangsabschnitt durch eine ringförmige Ausstülpung zu bilden. Beim Hineinstossen des Ausgussteils wirkt die ringförmige Ausstülpung ähnlich wie ein Scharnier, und es entsteht am Halsteil ein sauberer Rand, der als Dichtfläche für einen Verschluss dienen kann.

Vorteilhaft wird beim Blasen der Verpackung die Verbindungsstelle zwischen dem Ausgussteil und dem Uebergangsabschnitt durch eine ringförmige Einschnürung gebildet. Aehnlich wie vorher die ringförmige Ausstülpung, wirkt diese ringförmige Einschnürung als eine Art Scharnier beim Hineinstossen des Ausgussteils in den Halsteil. Weiter kann beim Blasen der Verpackung am Uebergangsabschnitt eine Anzahl von in Abständen voneinander angeordneten ringförmigen Einschnürungen ausgebildet werden. Dadurch wird die Verformung des Uebergangsabschnitts bei der Bildung des Ringraumes wesentlich erleichtert.

Ausser den vorangehend beschriebenen Ausgestaltungen des Uebergangsabschnitts sind noch weitere Ausgestaltungen möglich; so kann der Uebergangsabschnitt beispielsweise als Faltenbalg ausgestaltet sein, welcher leicht umgestülpt werden kann.

Es ist möglich, beim Blasen der Verpackung im Bereich der Verbindungsstelle zwischen dem Ausgussteil und dem Uebergangsabschnitt eine lokale Ausstülpung zu erzeugen. Diese Ausstülpung kann dann weggestanzt werden, um eine Oeffnung zu bilden. Diese Oeffnung kann verschiedenen Zwecken dienen, z.B. als Luftöffnung beim Ausgiessvorgang. Es kann dann Luft durch diese Oeffnung einfliessen, so dass die Flüssigkeit ohne Glucksen in einem ruhigen Strom ausfliessen kann, der ein gutes Dosieren erlaubt. Des weiteren kann nach Gebrauch der Flasche auch Restflüssigkeit durch diese Oeffnung in die Flasche zurückfliessen.

Es ist auch möglich, beim Blasen der Verpackung am Ausgussteil mindestens zwei, z.B. rippenförmige Ausstülpungen zu erzeugen, welche nach dem Umstülpen des Uebergangsabschnitts den Ausgussteil seitlich abstützen. Dadurch wird dem Ausgussteil eine grössere Stabilität gegeben. Schliesslich kann beim Blasen der Verpackung am Halsteil oder am Ausgussteil ein Gewinde zur Aufnahme eines Verschlussdeckels erzeugt werden.

Die Erfindung betrifft auch eine nach dem Verfahren hergestellte einstückige Verpackung. Eine solche blasgeformte Verpackung aus Kunststoff, bestehend aus einem Verpackungskörper und einem Aufsatz, welcher einen Halsteil und einen Ausgussteil aufweist, wobei innerhalb des Halsteiles ein Ringraum vorgesehen ist, ist dadurch gekennzeichnet, dass die Verpackung einstückig ist und dass der Halsteil über ein Uebergangsabschnitt mit dem Ausgussteil verbunden ist.

Weitere Ausführungsformen der blasgeformten Verpackung ergeben sich aus den Ansprüchen 13 bis 16.

Ausführungsbeispiele der Erfindung werden nun unter Bezugnahme auf die Zeichnung beschrieben. Es zeigt:

Fig. 1 eine Perspektivansicht eines Behälters, z.B. einer Griffflasche , nach dem Warmumformen, jedoch vor dem Eindrücken des Uebergangsabschnitts,

Fig. 2 den im Oberteil aufgeschnittenen fertigen Behälter, ebenfalls in perspektivischer Darstellung,

Fig. 3 eine Schnittdarstellung des Behälters während des Eindrückens des Uebergangsabschnitts,

Fig. 4 und 5 zwei Varianten des Behälters vor dem Eindrücken des Uebergangsabschnitts,

Fig. 6 eine Ansicht einer Griffflasche in der durch Blasen erzeugten Formgebung,

Fig. 7 eine Seitenansicht der Griffflasche von Fig. 6,

Fig. 8a den oberen Teil der Flasche von Fig. 6 in vergrösserter Darstellung,

Fig. 8b eine Seitenansicht von Fig. 8a nach dem Wegstanzen der Ausstülpung, wodurch eine Lufteinlassöffnung gebildet wurde,

Fig. 9 den Oberteil von Fig. 8 nach dem Umstülpen des Uebergangsabschnitts,

Fig. 10 ein Ausführungsbeispiel der Flasche, bei welchem am Ausgussteil rippenförmige Ausstülpungen vorgesehen sind,

Fig. 11 die Flasche gemäss Fig. 10 nach dem Wegstanzen eines Teils einer Ausstülpung und dem Umstülpen des Uebergangsabschnitts,

Fig. 12 eine Flasche wie in Fig. 11, jedoch mit einem Gewinde am Ausgussteil und

Fig. 13 einen Schnitt durch ein weiteres Ausführungsbeispiel einer Flasche in der durch Blasen erzeugten Formgebung, wobei der Uebergangsabschnitt die Gestalt eines Faltenbalges aufweist.

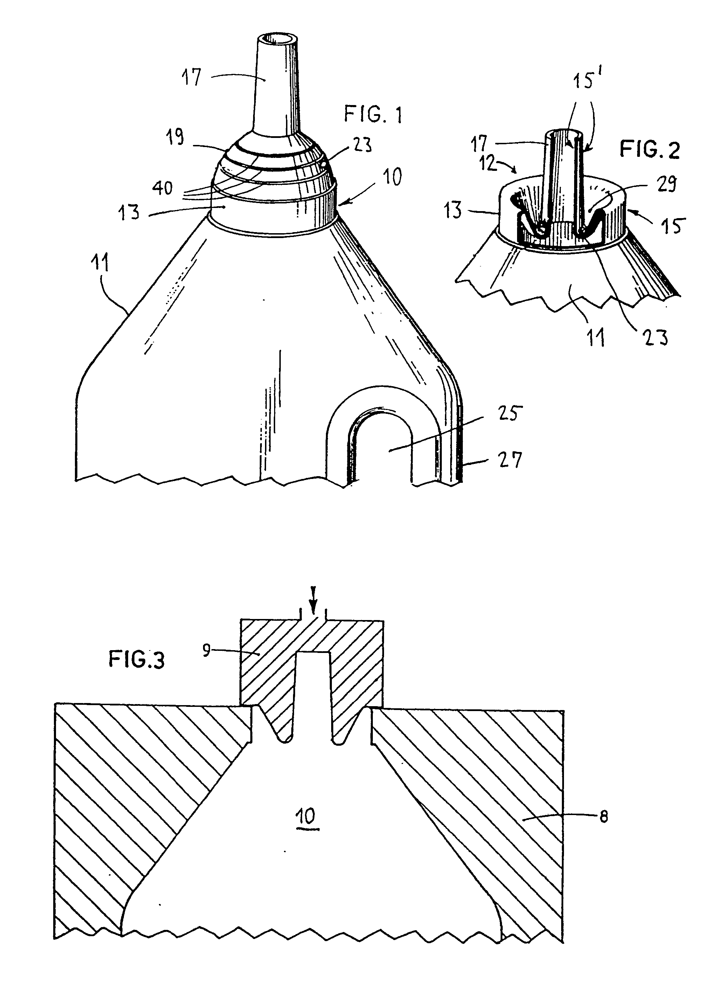

Der in Fig. 1 in seiner Gesamtheit mit 10 bezeichnete Behälter, z.B. eine Griffflasche mit einem Griff 27 und Grifföffnung 25, besteht aus einem thermoplastischen Kunststoff und wurde in einem Warmumformverfahren, beispielsweise durch Spritzen, Blasformen oder Spritzblasen, erstellt. Diese Verfahren sind dem Fachmann bekannt und bedürfen daher keiner weiteren Erläuterung.

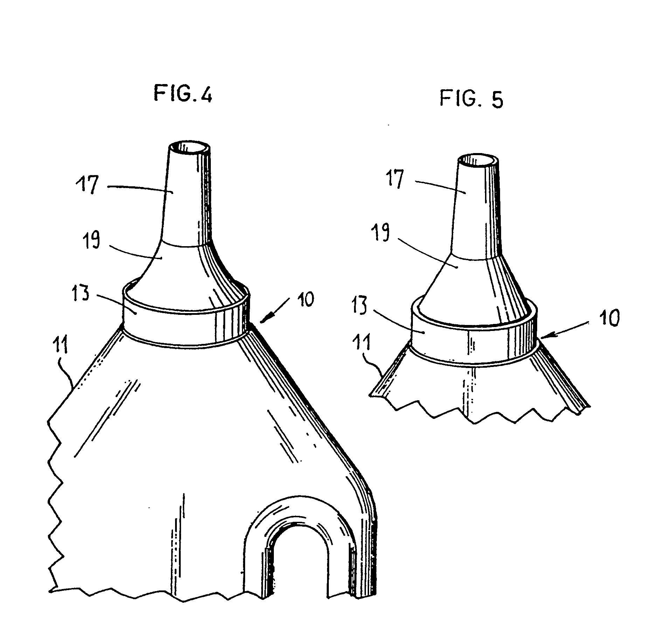

Der Behälter 10, z.B. ein Behälter, weist, wie Fig. 1 ferner zeigt, einen Verpackungskörper 11 auf, der zur Aufnahme eines flüssigen Gebrauchsgutes, beispielsweise eines Waschmittels oder Weichspülers, dient und der mit einem Ausgussteil 17 durch einen Uebergangsabschnitt 19 verbunden ist. Der Uebergangsabschnitt 19 wurde in dem vorangegangenen Warmumformverfahren so geformt, dass er sich vom Behälterkörper, z.B. dessen Halsteil 13, ausgehend in Richtung des Ausgussteils 17 kontinuierlich verjüngt. Seine dadurch erzielte Kontur kann dabei, wie Fig. 1 zeigt, konvex oder auch gemäss Fig. 4 konkav bzw. nach Fig. 5 kegelstumpfförmig sein.

Der Uebergangsabschnitt 19 ist vorzugsweise mit mehreren zur Behälterachse konzentrischen Rillen oder Einschnürungen 40, welche im gegenseitigen Abstand während der Warmumformung so eingeformt wurden, dass die Wandstärke des Uebergangsabschnitts 19 im Rillenbereich etwas dünner ist als im im übrigen Teil des Uebergangsabschnitts 19.

Gemäss einer weiteren Variante ist es auch möglich, den gesamten Uebergangsabschnitt 19 in etwas dünnerer Wandstärke auszuführen als den Verpackungskörper 11, bzw. den Ausgussteil 17.

Gemäss Fig. 2 wurde der in Fig. 1 dargestellte Behälter 10 so umgeformt, dass der Uebergangsabschnitt 19 einen den Unterteil des Ausgussteils 17 umgebenden Ringraum 29 bildet. Dieser dient als Auffangrinne, durch welche überschüssige Flüssigkeit, die kurz nach dem Ausgiessen an der Aussenwand des Ausgussteils 17 herabläuft, aufgefangen wird. Ferner ist am Boden der Auffangrinne 29 eine Rücklauföffnung 23 angeordnet, an deren Stelle aber auch der Ausgussteil 17 mit einem Rücklaufschlitz versehen werden könnte.

Um die Verwendung eines komplizierten und kostspieligen Formwerkzeugs zu umgehen, erfolgt das Eindrücken des Uebergangsabschnitts 19 und damit die Bildung der Auffangrinne 29 erst nach der Warmumformung. Hierzu wird der Behälter 10 in eine denselben allseitig umschliessende Matrize 8 eingesetzt, und der Uebergangsabschnitt 19 mit einem entsprechend geformten Stempel 9 in Pfeilrichtung eingedrückt. Die in Fig. 1 mit 40 bezeichneten Rillen übernehmen dabei eine Art Scharnierfunktion und erleichtern somit die Formung der Auffangrinne 29 (Fig. 2).

Das Eindrücken des Uebergangsabschnitts 19 kann im halbwarmen oder kalten Zustand des Behälters erfolgen.

Ein weiterer Vorteil des auf diese Weise geformten Behälters ist darin zu sehen, dass sich die am Boden der Auffangrinne 29 angeformte Ausgusstülle 17 ohne weiteres gegenüber der Behälterachse plastisch neigen lässt, was den Ausgussvorgang erleichtert.

Die Rillen 40 können in bezug auf den Verpackungskörper gleiche, schwächere oder stärkere Wanddicke aufweisen, da eine eingeformte Rille in allen Fällen die gewünschte Scharnierwirkung ausübt.

Am Umfang des Halsteils 13, bzw. an der Aussen- oder Innenwand des Ausgussteils 17 kann ein Gewinde zum Aufschrauben eines Deckels, z.B. eines Dosierdeckels, angebracht werden, wie dies mit den Bezugszeichen 15, bzw. 15' angedeutet ist.

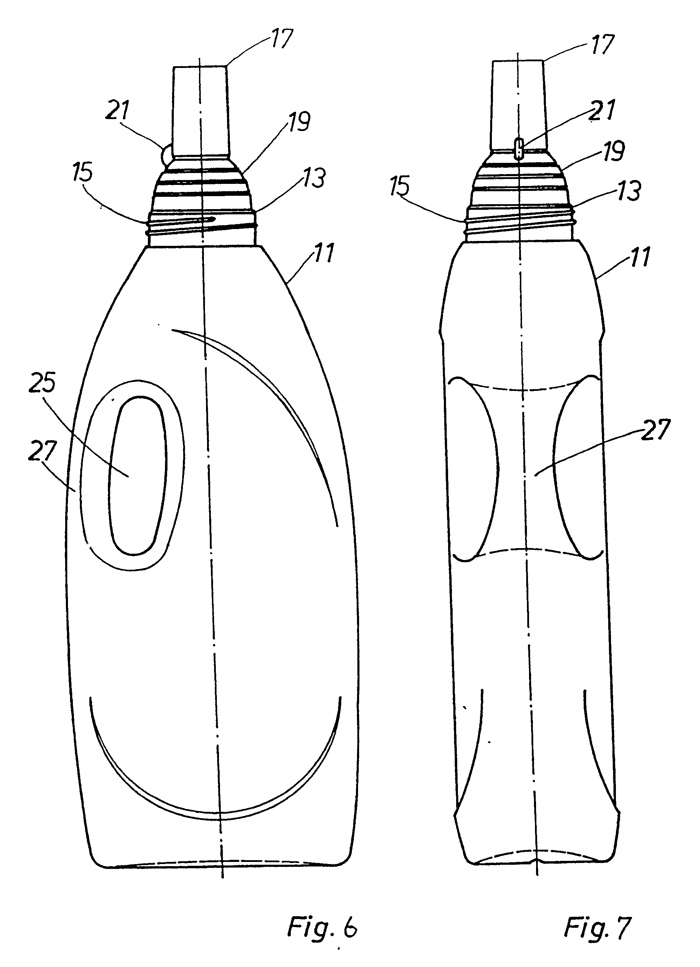

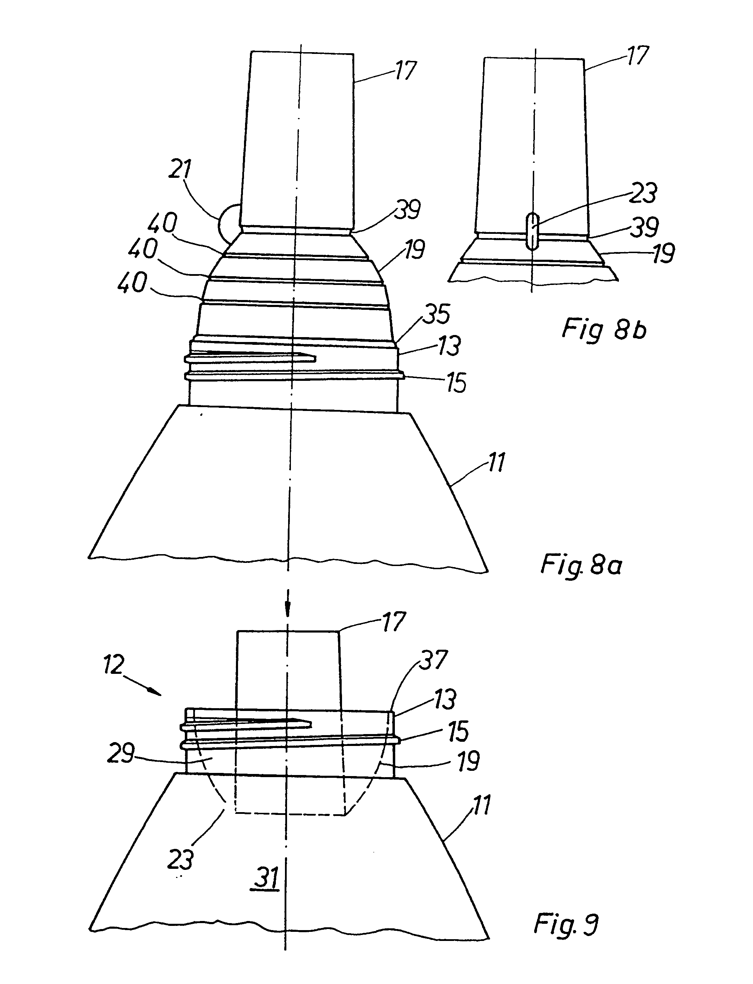

Das Halbfabrikat gemäss den Figuren 6 und 7 wird auf übliche Weise durch Blasen hergestellt. Das Halbfabrikat besteht aus dem Verpackungskörper 11, dem Halsteil 13 mit dem Gewinde 15, und dem Ausgussteil 17. Zwischen dem Halsteil 13 und dem Ausgussteil 17 befindet sich ein Uebergangsabschnitt 19. An der Verbindungsstelle zwischen dem Halsteil 13 und dem Uebergangsabschnitt 19 befindet sich eine lokale Ausstülpung 21, die weggestanzt werden kann, um in diesem Bereich eine Oeffnung 23 (Fig. 8b) zu erzeugen.

Der Verpackungskörper 11 kann eine beliebige Form aufweisen. Beim gezeigten Ausführungsbeispiel hat er die Form einer Griffflasche, bei welcher die Grifföffnung mit dem Bezugszeichen 25 bezeichnet ist. In diesem Fall befindet sich der Griff 27 und die Ausstülpung 21 auf der gleichen Seite, so dass auch später die Oeffnung 23 auf die Griffseite zu liegen kommt und ihre Funktion als Lufteinlass erfüllen kann.

Wie bereits erwähnt, wird nach dem Blasen der Flasche die Ausstülpung 21 zwecks Erzeugung einer Oeffnung 23 weggestanzt. Hierauf wird der Ausgussteil 17 in den Halsteil 13 gestossen (Fig. 9). Damit ist aus dem zuvor beschriebenen Halbfabrikat das fertige Produkt entstanden. Wenn der Uebergangsabschnitt 19 flexibel ausgebildet wird, kann der Ausgussteil 17 in kaltem Zustand des Uebergangsabschnitts in den Halsteil 13 gestossen werden. Es ist aber auch möglich, den Uebergangsabschnitt z.B. durch eine Infrarotquelle zu erwärmen bis das Material eine genügende Plastizität aufweist und leicht verformbar wird.

Das fertige Produkt besteht einstückig aus dem Verpackungskörper 11 und dem Aufsatz 12, der durch den Halsteil 13 und den Ausgussteil 17 gebildet wird, welche über den Uebergangsabschnitt 19 miteinander verbunden sind. Zwischen dem Halsteil 17 und dem umgestülpten Uebergangsabschnitt 19 befindet sich ein ringförmiger Raum 29, der unten eine Oeffnung 23 aufweist. Diese Oeffnung 23 dient beim Ausgiessen als Lufteinlassöffnung. Nach dem Gebrauch der Flasche kann Restflüssigkeit aus dem Ringraum 29 in das Innere 31 fliessen.

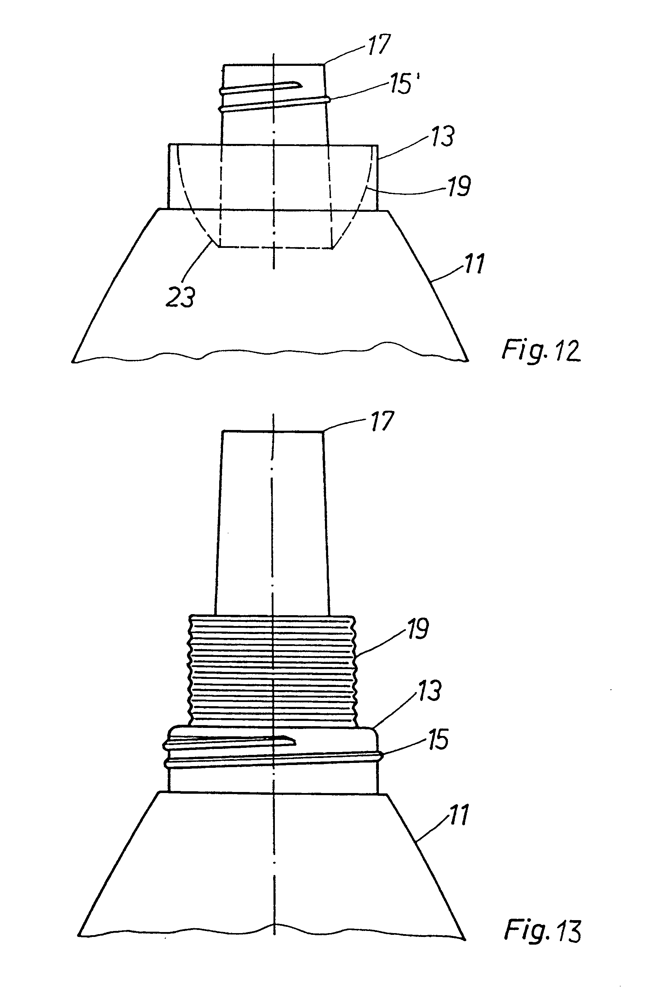

Das Gewinde 15 am Halsteil dient dem Aufschrauben des Verschlusses. Es ist auch möglich, am Ausgussteil 17 ein Gewinde 15' vorzusehen (Fig. 12).

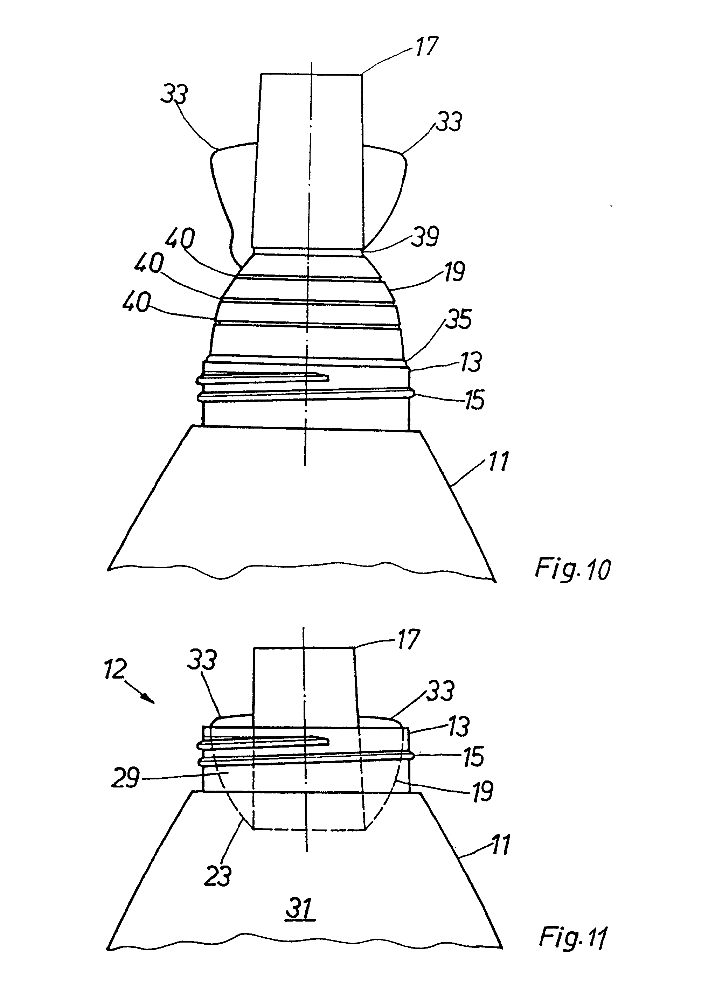

Die Ausführungsform gemäss den Figuren 10 und 11 unterscheidet sich von der Ausführungsform der Figuren 8 und 9 lediglich dadurch, dass mindestens zwei relativ grosse rippenförmige Ausstülpungen 33 anstelle der lokalen Ausstülpung 21 vorgesehen sind. Durch diese Ausstülpungen 33 wird dann der Ausgussteil 17 im Aufsatz 12 abgestützt (Fig. 11).

Wie aus den Figuren 1, 6, 7 und 10 ersichtlich ist, ist der Uebergangsabschnitt 19 vorzugsweise kuppelförmig. Dadurch wird das Umstülpen erleichtert. Wie Fig. 8a zeigt, ist an der Verbindungsstelle zwischen dem Halsteil 13 und dem Uebergangsabschnitt 19 eine ringförmige Ausstülpung 35 vorhanden. Beim Hineinstossen des Ausgussteils 17 wirkt diese ringförmige Ausstülpung 35 wie ein Scharnier. Es entsteht daher am Halsteil 13 ein sauberer Rand, der als Dichtfläche 37 für einen Verschluss dienen kann. Zwischen dem Ausgussteil 17 und dem Uebergangsabschnitt 19 ist ferner eine ringförmige Einschnürung 39 vorgesehen. Diese wirkt ebenfalls als eine Art Scharnier beim Hineinstossen des Ausgussteils 17 in den Halsteil 13. Um das Umstülpen weiter zu erleichtern, ist ferner am Uebergangsabschnitt 19 eine Anzahl von in Abständen voneinander angeordneten ringförmigen Einschnürungen 40 vorgesehen.

Ausser der vorangehend beschriebenen Ausgestaltungen sind noch weitere Ausgestaltungen möglich. So zeigt Fig. 13 einen Schnitt durch ein Halbfabrikat, bei dem der Uebergangsabschnitt 19 eine zylindrische Form aufweist und als Faltenbalg ausgebildet ist. Auch bei dieser Ausgestaltung kann der Ausgussteil 17 in den Halsteil 13 gestossen werden, so dass er die in Fig. 11 oder 12 gezeigte Stellung einnimmt.

Es sind verschiedene weitere Aenderungen möglich, ohne vom Erfindungsgedanken abzuweichen. So kann beispielsweise auch eine Schrägstellung des Ausgussteils 17, z.B. durch entsprechende Ausbildung der rippenförmigen Ausstülpungen 33, erzielt werden.

**Patentansprüche**

1. Verfahren zur Herstellung einer einstückigen blasgeformten Verpackung, z.B. einer Flasche, insbesondere für flüssige Produkte, mit einem Verpackungskörper (11) und einem Aufsatz (12), welcher einen Halsteil (13) und einen Ausgussteil (17) aufweist, dadurch gekennzeichnet, dass beim Blasen ein Uebergangsabschnitt (19) zwischen dem Halsteil (13) und dem Ausgussteil (17) ausgebildet wird und dass dann der Ausgussteil (17) in den Halsteil (13) gestossen wird, wodurch der Uebergangsabschnitt (19) zur Bildung eines Ringraums (29) innerhalb des Halsteils (13) umgestülpt wird.

2. Verfahren nach Anspruch 1, dadurch gekennzeichnet, dass der Uebergangsabschnitt (19) flexibel ausgebildet und der Ausgussteil (17) in kaltem Zustand des Uebergangsabschnitts in den Halsteil (13) gestossen wird.

3. Verfahren nach Anspruch 1, dadurch gekennzeichnet, dass der Uebergangsabschnitt (19) erwärmt wird, bevor der Ausgussteil in den Halsteil (13) gestossen wird.

4. Verfahren nach einem der Ansprüche 1 bis 3, dadurch gekennzeichnet, dass beim Blasen der Verpackung der Uebergangsabschnitt (19) kuppelförmig ausgebildet wird.

5. Verfahren nach einem der Ansprüche 1 bis 4, dadurch gekennzeichnet, dass beim Blasen die Verbindungsstelle zwischen dem Halsteil (13) und dem Uebergangsabschnitt (19) durch eine ringförmige Ausstülpung (35) gebildet wird.

6. Verfahren nach einem der Ansprüche 1 bis 5, dadurch gekennzeichnet, dass beim Blasen der Verpackung die Verbindungsstelle zwischen dem Ausgussteil (17) und dem Uebergangsabschnitt (19) durch eine ringförmige Einschnürung (39) gebildet wird.

7. Verfahren nach einem der Ansprüche 1 bis 6, dadurch gekennzeichnet, dass beim Blasen der Verpackung am Uebergangsabschnitt (19) eine Anzahl von in Abständen voneinander angeordneten ringförmigen Einschnürungen (40) ausgebildet wird.

8. Verfahren nach Anspruch 7, dadurch gekennzeichnet, dass die Wanddicke im Bereich der Einschnürungen (40) schwächer, gleich oder stärker ausgebildet wird als im angrenzenden Wandbereich.

9. Verfahren nach einem der Ansprüche 1 bis 3, dadurch gekennzeichnet, dass der Uebergangsabschnitt (19) als Faltenbelag ausgebildet ist.

10. Verfahren nach einem der Ansprüche 1 bis 9, dadurch gekennzeichnet, dass beim Blasen der Verpackung im Bereich der Verbindungsstelle zwischen dem Ausgussteil (17) und dem Uebergangsabschnitt (19) eine lokale Ausstülpung (21) erzeugt wird und dass diese lokale Ausstülpung dann weggestanzt wird, um eine Oeffnung (23) zu erzeugen.

11. Verfahren nach einem der Ansprüche 1 bis 10, dadurch gekennzeichnet, dass entweder beim Warmformen oder beim Eindrücken des Uebergangsabschnitts ein Rücklaufloch im Bereich der Auffangrinne oder im unteren Abschnitt der Ausgusstülle durchgestossen wird.

12. Verfahren nach Anspruch 11, dadurch gekennzeichnet, dass das Rücklaufloch am Boden der Auffangrinne durchgestossen wird.

13. Verfahren nach Anspruch 11, dadurch gekennzeichnet, dass das Rücklaufloch in Form eines an dem Ausgussteil angeodneten Schlitzes durchgestossen wird.

14. Verfahren nach einem der Ansprüche 1 bis 10, dadurch gekennzeichnet, dass beim Blasen der Verpackung am Ausgussteil mindestens zwei z.B. rippenförmige Ausstülpungen (33) erzeugt werden, welche nach dem Umstülpen des Uebergangsabschnitts (19) den Ausgussteil (17) seitlich abstützen.

15. Verfahren nach einem der Ansprüche 1 bis 14, dadurch gekennzeichnet, dass beim Blasen der Verpackung am Halsteil (13) ein Gewinde (15) zur Aufnahme eines Verschlussdeckels erzeugt wird.

16. Verfahren nach einem der Ansprüche 1 bis 15, dadurch gekennzeichnet, dass das Eindrücken des Uebergangsabschnitts durch einen der Form der angestrebten Auffangrinne entsprechenden Stempel erfolgt, wobei der Behälterkörper während des Eindrückvorgangs in einer Matrize gehalten wird.

17. Blasgeformte Verpackung aus Kunststoff, z.B. Flasche, bestehend aus einem Verpackungskörper (11) und einem Aufsatz (12), welcher einen Halsteil (13) und einen Ausgussteil (17) aufweist, wobei innerhalb des Halsteils ein Ringraum (29) vorgesehen ist, dadurch gekennzeichnet, dass die Verpackung einstückig ist und dass der Halsteil (13) über einen Uebergangsabschnitt (19) mit dem Ausgussteil (17) verbunden ist.

18. Verpackung nach Anspruch 17, dadurch gekennzeichnet, dass im Bereich der Verbindungsstelle zwischen Ausgussteil (17) und Uebergangsabschnitt (19) eine Oeffnung (23) vorgesehen ist.

19. Verpackung nach Anspruch 17 oder 18, dadurch gekennzeichnet, dass der Ausgussteil (17) innerhalb des Halsteils (13) durch z.B. rippenförmige Ausstülpungen (33) seitlich abgestützt ist.

20. Verpackung nach einem der Ansprüche 17 bis 19, dadurch gekennzeichnet, dass am Halsteil (13) ein Gewinde (15) zur Aufnahme eines Verschlussdeckels angeordnet ist.

21. Verpackung nach einem der Ansprüche 17 bis 20, dadurch gekennzeichnet, dass am Ausgussteil (17) ein Gewinde (15') zur Aufnahme eines Verschlussdeckels angeordnet ist.

22. Verfahren zur Herstellung eines Kunststoffbehälters für den periodischen Konsum flüssiger Schüttgüter, welcher einen zur Aufnahme des Schüttguts, insbesondere eines Waschmittels, bestimmten Behälterkörper aufweist, dessen Oberteil in eine Ausgusstülle übergeht, wobei der Behälter aus einem thermoplastischen Kunststoff vorgeformt wird, dadurch gekennzeichnet, dass der Behälter im Warmformverfahren, im Uebergangsbereich zwischen Behälterkörper und Ausgusstülle, mit einem sich vom Behälterkörper zur Ausgusstülle verjüngenden Uebergangsabschnitt versehen wird, welcher anschliessend an den Warmformvorgang ins Innere des Behälterkörpers eingedrückt wird und damit eine die Ausgusstülle ringförmige umgebende Auffangrinne bildet.

FIG. 1

17

19

23

40

13

10

11

25

27

FIG. 2

15'

17

12

13

29

15

11

23

FIG. 3

9

10

8

## FIG. 4

## FIG. 5

Fig. 6

Fig. 7

Fig 8b

Fig. 8a

Fig. 9

Fig. 10

Fig. 11

31

Fig. 12

Fig. 13

Europäisches
Patentamt

**EUROPÄISCHER RECHERCHENBERICHT**

Nummer der Anmeldung

EP 91 81 0365

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 417 954 (GRAHAM ENGINEERING CORP.) <br> * Das ganze Dokument; insbesondere Ansprüche 1,3,9,10; Spalte 6, Zeilen 11-13; Figuren 1,3-5,10,11 * <br> --- | 1-6,8, 11-13, 15-18, 20-22 | B 29 C 57/00 <br> B 65 D 23/06 <br> B 65 D 25/42 // <br> B 29 L 22:00 |
| X | US-A-4 640 855 (St. CLAIR) <br> * Das ganze Dokument; insbesondere Spalte 1; Zeile 53 - Spalte 2, Zeile 7 * <br> --- | 1,3-6, 10-13, 15-18, 20,22 | |
| X | US-A-4 602 728 (HA) <br> * Spalte 3, Zeilen 33-52; Figuren 2,3,6 * <br> --- | 1-3,5-9 ,15,17, 21,22 | |
| X | EP-A-0 405 683 (COLGATE-PALMOLIVE) <br> * Spalte 1, Zeile 37 - Spalte 2, Zeile 20; Spalte 3, Zeilen 38-45; Spalte 5, Zeilen 10-25; Figuren 5-8; Ansprüche 1-4,6-8 * <br> --- | 1-4,15, 17,22 | |
| A | US-A-4 027 811 (CHLYSTUN) <br> ----- | 1-22 | **RECHERCHIERTE SACHGEBIETE (Int. Cl.5)** <br><br> B 29 C <br> B 65 D |

Der vorliegende Recherchenbericht wurde für alle Patentansprüche erstellt

| Recherchenort | Abschlußdatum der Recherche | Prüfer |
|---|---|---|
| DEN HAAG | 28-08-1991 | BUFACCHI B.A.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

    ......................................................................................
& : Mitglied der gleichen Patentfamilie, übereinstimmendes Dokument